# EUROPEAN PATENT SPECIFICATION

(11) **EP 3 249 078 B1**
(45) Date of publication and mention of the grant of the patent: **23.12.2020**
(21) Application number: 17171893.5
(22) Date of filing: 19.05.2017
(51) Int. Cl.: C25B 1/10, C01B 3/04, C25B 15/08

(54) **APPARATUS TO PRODUCE HYDROGEN**
VORRICHTUNG ZUR ERZEUGUNG VON WASSERSTOFF
APPAREIL POUR PRODUIRE DE L'HYDROGÈNE

(30) Priority: 24.05.2016 IT UA20163763
(43) Date of publication of application: 29.11.2017
(73) Proprietor: MICROPROGEL SRL, 35038 Torreglia (PD) (IT)
(72) Inventor: GAFFO, Valter, 35038 Torreglia (PD) (IT)
(74) Representative: Citron, Massimiliano

(56) References cited:
- WO-A1-2006/110015
- US-A1- 2013 043 124

## Description

The invention refers to an apparatus for producing hydrogen from water through a PEM cell.

Hydrogen generators using PEM cells, see e.g. EP2371438, basically work according to the same principle. The water is pumped into tubes and arrives to the PEM cell, where it is separated into pure hydrogen (H₂) and oxygen (O₂) according to the reaction

2H₂O → 2H₂ + O₂.

The water comes to the PEM cell pushed either by a pump or, in some models, gravity acting on the water of a tank to which the PEM cell is connected through a pipe. A dosing valve that automatically opens when the downstream flow decreases, is mounted on this tube.

However, there is always a flow of running water on the PEM cell.

The pipes and the pump to bring water to the PEM cell are bulky, expensive and vulnerable to leakages damaging the electronic parts. Besides, they can also favor the formation of clogging algae or pollutants with a significant reduction in the efficiency of the apparatus.

WO 2006/110015 and US 2013/043124 disclose apparatuses for the production of hydrogen. A PEM cell is mounted at the bottom of a tank.

To overcome one or more of these problems is the object of the invention, which is defined in the appended claims, in which the dependent ones define advantageous variants.

An apparatus for producing pressurized hydrogen comprises the features of claim 1.

An advantage is the greater compactness of the overall apparatus, and the cost of any pumps for water circulation and maintenance is eliminated.

A method of using the apparatus according to the invention involves that the wall that the cell PEM forms in the tank is the bottom wall. The method of using envisages to feed the PEM cell from a stagnant-water tank that is devoid of the bottom and placed on the PEM cell so that the PEM cell forms the tank's bottom. This is particularly advantageous because the PEM cell is fed by stagnant water which stands motionless on it, wets it directly and feeds it by gravity in a very efficient way. Another advantage is that the water pressure on the PEM cell is constant throughout the surface of the PEM cell, so the yield in the PEM cell is uniform.

Terms such as e.g. *above* or *below* refer to the apparatus when in use, in particular referring to the direction of the force of gravity, which determines the direction of the flow of water from the tank to the PEM cell.

A method of using the apparatus according to the invention involves mounting a grid between the PEM cell and the tank, with the effect of allowing the passage of the water of the tank directly inside the PEM cell and also reinforcing the membrane of the PEM cell that goes under pressure and swells when hydrogen develops. The grid allows a higher working pressure for the generated hydrogen. The PEM cell has a porous anode on which the grid (e.g. a perforated flange) has been added so as to allow the water passage toward the membrane and, at the same time, to increase the resistance to high pressures coming from the hydrogen side (from 12 bar and beyond). If the polymeric membrane inside the PEM cell would bend due to pressure, the electric contact would be lost and the membrane would break.

Another aspect of the invention is an apparatus for producing pressurized hydrogen comprising the features of claim 3.

The apparatus shares the advantages and variations mentioned for the method. Specifically, the tank is without bottom and is placed above the PEM cell so that the PEM cell forms the bottom of the tank.

The apparatus comprises a disc between the PEM cell and the tank, with the effect of allowing the passage of the water of the tank directly inside the PEM cell and also reinforcing the membrane of the PEM cell that goes under pressure and swells when hydrogen develops. The disc is provided with parallel slots for the passage of water towards the underlying PEM cell. The disc is preferably a metallic disc. Said disc of the PEM cell is placed in contact with the porous anode of the PEM cell.

As advantageous constructive variants for the apparatus, we cite that:
- the tank consists of a hollow cylinder mounted above the PEM cell; and/or
- the apparatus comprises a level sensor for the water level in the tank, preferably connected to an electronic circuit or a mechanism that causes water introduction into the tank when the water level is lower than a threshold; and/or
- the apparatus comprises a driving and/or control electronic board for the PEM cell mounted directly onto the PEM cell on the side opposite to that in contact with the tank. For example, to exploit the vertical structure of the tank and of the PEM cell, the board may be mounted under the PEM cell. The advantage is in any case reducing the electrical wiring; and/or
- in the apparatus, the PEM membrane of the cell develops along a plane and the tank, preferably cylindrical, has an axis perpendicular to this plane; and/or
- the apparatus comprises watertight fastening means for the tank and the PEM cell. Preferably such fastening means comprise or consist of an element that comprises
   a portion which can be attached, by shape-coupling and watertight seal, to the edge of the tank at the missing wall or bottom, and
   a flange fastened to the PEM cell via fastening elements.

The advantages of the invention will be clearer from the following description of a preferred embodiment of apparatus, reference making to the attached drawings wherein
Fig. 1 shows an exploded three-dimensional view of an apparatus;
Fig. 2 shows a side view of the apparatus in assembled configuration;
Fig. 3 shows a cross-section view according to plane II-II;
Fig. 4 shows an enlarged view of Fig. 3.

In the figures, the same numbers indicate equal parts, and to not crowd the drawings some parts are not marked by numbers.

An apparatus 10 to produce pure hydrogen from water comprises a PEM cell - indicated as a whole with 12 - and a tank 40 for water. The cell 12 comprises at the top a disc 20 provided at the center with a series of pass-through slots 22 parallel to each other. The disc is fixed to the rest of the cell PEM 12 e.g. by means of tightening screws 24.

The disc 20 represents a flange of the cell 12, and that is normally water-tight. Moreover, it should be noted that in the prior art the water is circulated between the disc 20 and the PEM cell's membrane, unlike the concept of the invention (see below).

Under the disc 20 there are all the layers that make up the PEM cell.

The tank 40 has cylindrical shape, has Y axis, is bottomless and has an (optional) upper lid 42. The tank 40 in the example is split into three pieces 30, 40, 42 in order to reduce costs, but it could be built in one or two pieces.

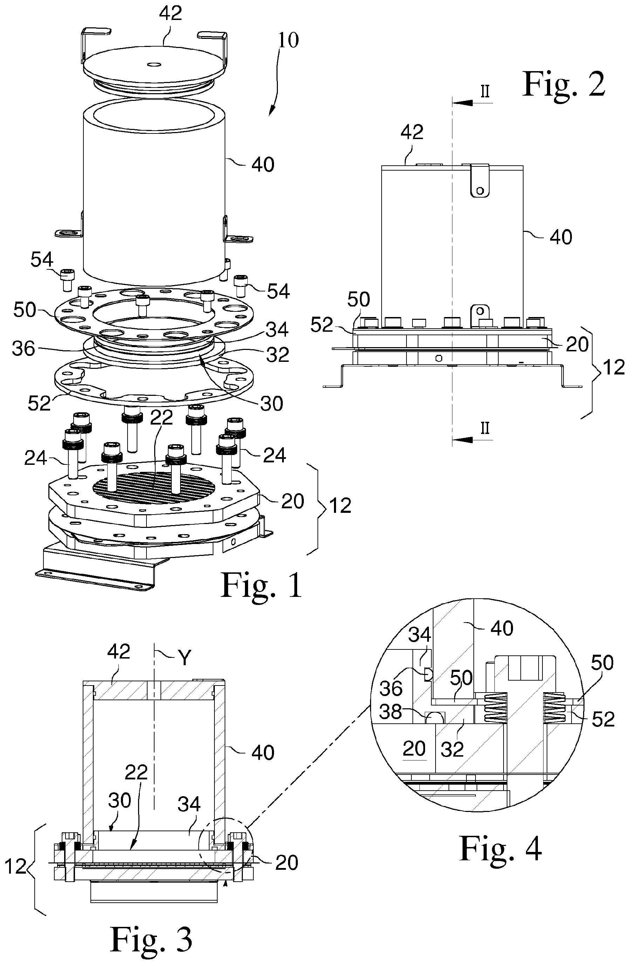

Between the disc 20 and the tank 40 there is a ring 30, which comprises a central bush 34 which is coaxial to the Y axis and from which a flange 32 protrudes. The bush 34 has an outer diameter approximately equal to that of the tank 40 and is preferably equipped, on the outer lateral surface, with a sealing gasket 36, e.g. an O-ring. Preferably, also the bottom of the flange 32 has a gasket 38 (see figure 4), to abut watertightly against the disc 20. In the assembled apparatus, the bottom edge of the tank 40 rests above the flange 32. The flange 32 is seated on the disc 20 so as to surround the slots 22 in the center, and the bottom of the tank 40 is watertightly inserted around the bush 34 (see figure 3).

Two rings 50, 52 serve to create a sealing and fixing system for the tank 40 and the disc 20. The ring 52 is in contact with the perimeter of the disc 20 and surrounds the flange 32, of which has about the same thickness. The ring 52 acts as a stand-off and abutment for the ring 50 above, which has a narrower central opening so as to press with the inner edge the flange 32 against the face of the disc 20 (fig. 4). The two rings 50, 52 are clamped one on the other by screws 54.

When the assembly is completed, the tank 40 is filled with water and the slots 22 form a grid through which water can directly supply the underlying PEM cell 12. Note that pipes or pumps are advantageously absent to transfer water from the storage point to the PEM cell.

Inside the tank 40 bubbles of oxygen develop which go up, while the water level drops as the reaction inside the cell 12 proceeds.

It is sufficient from time to time to restore an appropriate level of water inside the tank 40. This can be done e.g. by arranging in the tank 40 a level sensor or a float; and open a water intake valve when the level is below a threshold.

The shape of the tank 40 may vary, for example every cross-section being possible. Correspondingly, the section of the bush 34 will vary, for the shape's adaptation.

The application of a tank to the PEM cell may take place in general in any way, provided there is direct contact between the water and the PEM cell.

## Claims

1. Apparatus (10) for producing pressurized hydrogen comprising:
a PEM cell (12), having a porous cathode and a membrane, to separate water molecules into oxygen and hydrogen molecules,
a water tank (40) to feed the PEM cell, the tank (40) being devoid of the bottom and being placed above the PEM cell, so that the PEM cell forms the bottom of the tank,
**characterized in that**
a disc (20) is placed between the PEM cell and the tank,
the disc being
provided with parallel slots (22) for the passage of water towards
the underlying PEM cell, and
placed in contact with the porous anode of the PEM cell and configured to reinforce the membrane of the PEM cell that goes under pressure and swells when hydrogen develops.

2. Apparatus (10) according to claim 1, wherein the disc is a metallic disc.

3. Apparatus (10) according to claim 1 or 2, wherein the tank consists of a hollow cylinder mounted above the PEM cell.

4. Apparatus (10) according to claim 1 or 2 or 3, comprising a PEM cell driver and/or control electronic board mounted directly on the PEM cell on the opposite side to that in contact with the tank.

5. Apparatus (10) according to any one of claims 1 to 4, comprising water-tight fixing means (30, 50, 52, 54) for the tank and the PEM cell.

6. Apparatus (10) according to claim 5, wherein such fastening means comprise or consist of an element that comprises
a portion which can be attached, by shape-coupling and watertight seal, to the edge of the tank at the missing wall or bottom, and
a flange fastened to the PEM cell via fastening elements.

## Patentansprüche

1. Vorrichtung (10) zur Herstellung von Druckwasserstoff, umfassend:
eine PEM-Zelle (12) mit einer porösen Kathode und einer Membran, um Wassermoleküle in Sauerstoff- und Wasserstoffmoleküle zu trennen,
einen Wassertank (40) zur Versorgung der PEM-Zelle, wobei der Tank (40) ohne Boden ist und über der PEM-Zelle angeordnet ist, so dass die PEM-Zelle den Boden des Tanks bildet,
**dadurch gekennzeichnet, dass**
eine Scheibe (20) wird zwischen der PEM-Zelle und dem Tank platziert,
wobei die Scheibe
mit parallelen Schlitzen (22) für den Durchgang von Wasser zur darunter liegenden PEM-Zelle versehen ist, und
in Kontakt mit der porösen Anode der PEM-Zelle gebracht und so konfiguriert ist, dass sie die Membran der PEM-Zelle verstärkt, die unter Druck geht und anschwillt, wenn Wasserstoff entsteht.

2. Vorrichtung (10) nach Anspruch 1, wobei die Scheibe eine Metallscheibe ist.

3. Vorrichtung (10) nach Anspruch 1 oder 2, wobei der Tank aus einem Hohlzylinder besteht, der über der PEM-Zelle montiert ist.

4. Vorrichtung (10) nach Anspruch 1 oder 2 oder 3, bestehend aus einer PEM-Zell-Treiber- und/oder Steuerelektronikplatine, die direkt auf der PEM-Zelle auf der dem Tank berührenden gegenüberliegenden Seite montiert ist.

5. Vorrichtung (10) nach einem der Ansprüche 1 bis 4, mit wasserdichten Befestigungsmitteln (30, 50, 52, 54) für den Tank und die PEM-Zelle.

6. Vorrichtung (10) nach Anspruch 5, wobei solche Befestigungsmittel ein Element umfassen oder aus einem Element bestehen, das
ein Teil, das durch formschlüssige Verbindung und wasserdichte Abdichtung am Rand des Tanks an der fehlenden Wand oder am Boden befestigt werden kann, und
einem Flansch, der über Befestigungselemente an der PEM-Zelle befestigt ist.

## Revendications

1. Appareil (10) pour la production d'hydrogène sous pression comprenant :
une cellule PEM (12), ayant une cathode poreuse et une membrane, pour séparer molécules d'eau en molécules d'oxygène et d'hydrogène,
un réservoir d'eau (40) pour alimenter la cellule PEM, le réservoir (40) étant dépourvu de fond et étant placé au-dessus de la cellule PEM, de sorte que la cellule PEM forme le fond du réservoir,
**caractérisé en ce que**
un disque (20) est placé entre la cellule PEM et le réservoir,
le disque étant
doté de fentes parallèles (22) pour le passage de l'eau vers la cellule PEM sous-jacente, et
placé en contact avec l'anode poreuse de la cellule PEM et configuré pour renforcer la membrane de la cellule PEM qui passe sous pression et gonfle lorsque l'hydrogène se développe.

2. Appareil (10) selon la revendication 1, dans lequel le disque est un disque métallique.

3. Appareil (10) selon la revendication 1 ou 2, dans lequel le réservoir est constitué cylindre creux monté au-dessus de la cellule PEM.

4. Appareil (10) selon la revendication 1 ou 2 ou 3, comprenant une carte électronique de commande et/ou de contrôle de cellule PEM montée directement sur la cellule PEM du côté opposé à celui en contact avec le réservoir.

5. Appareil (10) selon l'une des revendications 1 à 4, comprenant des moyens de fixation étanches (30, 50, 52, 54) pour le réservoir et la cellule PEM.

6. Appareil (10) selon la revendication 5, dans lequel ces moyens de fixation comprennent ou consistent en un élément qui comprend
une partie qui peut être fixée, par un assemblage de forme et un joint étanche, au bord de la citerne au niveau de la paroi ou du fond manquant, et
une bride fixée à la cellule PEM par des éléments de fixation.
